Europäisches Patentamt

European Patent Office

Office européen des brevets

(11) Publication number: **0 414 214 A2**

# (12) EUROPEAN PATENT APPLICATION

(21) Application number: **90116016.8**

(22) Date of filing: **21.08.90**

(51) Int. Cl.⁵: **B32B 3/10, B32B 5/08**

(30) Priority: **24.08.89 FI 893966**

(43) Date of publication of application:
**27.02.91 Bulletin 91/09**

(84) Designated Contracting States:
**AT BE CH DE DK ES FR GB GR IT LI LU NL SE**

(71) Applicant: **NESTE OY**
**Keilaniemi**
**SF-02150 Espoo(FI)**

(72) Inventor: **Slotte, Stefan**
**Ristiaallokonkatu 5 B 30**
**F-02320 Espoo(FI)**
Inventor: **Patteri, Matti**
**Hakkurintie 18**
**F-01680 Vantaa(FI)**

(74) Representative: **Bühling, Gerhard, Dipl.-Chem.**
**et al**
**Patentanwaltsbüro Tiedtke-Bühling-Kinne**
**Grupe-Pellmann-Grams-Struif Bavariaring 4**
**D-8000 München 2(DE)**

(54) **Abrasion resistant band and method of preparing the same.**

(57) The invention is concerned with a perforated (16) abrasion resistant band (20,30) that contains carbon fibers (12) as reinforcement and a method of preparing an abrasion resistant band. The band comprises at least one core layer that consists of PET-fabrics (11) bound to a matrix of thermosetting plastic and of longitudinal carbon fibers (12) so that the area containing carbon fibers (12) extends in the transversal direction of the band (20) towards the central line at most as far as to the area (14) to be perforated, a shell (15) of thermoplastic, that surrounds said core layer (16) and a perforation (16) made in the central line (13) or central region of the band (30) in which perforation each hole (16) is surrounded with an edge of thermoplastic.

FIG.1a

FIG.1b

FIG.1c

FIG.1d

## ABRASION RESISTANT BAND AND METHOD OF PREPARING THE SAME

The invention is concerned with a perforated abrasion resistant band which contains carbon fibers as reinforcement and with a method of preparing the same.

Bands made of plastic-reinforcement-composites can be used for instance as geared transmission agents and in accurate space transmissions as for example in the shuttles of mechanical looms. In this kind of use both good strength properties, in the first hand tensile strength, and abrasion resistance are required for the bands at the same time. The basic materials in the composites can be thermosetting or thermoplasts in the form of matrix plastics and different reinforcing fibers as reinforcements.

By using carbon fibers as reinforcements it is possible to achieve very high values on the tensile strength. A problem by using carbon fibers as reinforcements in perforated bands is that the perforating of the bands, by punctioning the layers containing the carbon fibers, is troublesome. The cutting of the holes cannot be made tidily and the abrasion of the tools is stronger than usual. Another problem is that very high requirements are made on the abrasion resistance and dimension stability of the holes in connection with gear drive.

The invention provides a perforated band that contains carbon fibers as reinforcement and having both the longitudinal strength properties that naturally is achieved with the use of carbon fibers and, at the same time, good tranversal strength properties and a good abrasion strength of the perforation. These advantages are achieved according to the invention so that the band comprises at least one core layer of PET-fabrics bound to the matrix of thermosetting plast and of longitudinal carbon fibers so that the area containing carbon fibers extends in the transversal direction of the band towards the central line at most as far as the area to be perforated, a shell of thermoplastic that surrounds said core layer and a perforation that is punctioned to the central line or central area of the band, in which perforation each band is surrounded by an edge of thermoplastic.

The longitudinal carbon fibers, placed in the edge areas of the band, cause good strength properties, the PET-fabric layers give a good transversal strength to the band. As the holes are surrounded by thermoplastic, good perforating and abrasion properties are achieved for the holes. The shell of thermoplastic that surrounds the core band gives good sliding properties and a good abrasion strength to the band and at the same time the holes will be surrounded by an edge of thermoplastic that guarantees a good abrasion strength.

According to an advantageous embodiment of the invention the core layer can be divided into two or several separate layers in which case it is possible to regulate the rigidity properties of the band. Futhermore, by changing the mutual distance of the core layers, a variably changing rigidity can be achieved in the longitudinal direction of the band and thus suitable rigidity profiles for special applications. The rigidity of the band increases with increasing mutual distances of the core layers.

According to an advantageous embodiment of the invention the carbon fibers are placed in the edge zones of the band between the PET-fabrics so that they keep their place when the reinforcing fibers are bound to the matrix of thermosetting plastic when the core layer is formed. The perforation of the holes through the core band on the central line or the central area does not give rise to problems because the carbon fibers do not extend as far as to the area to be perforated.

The invention also provides a method of preparing a perforated, abrasion resistant band, which contains carbon fibers as reinforcement. The method of the invention is characterized in that it comprises the following steps:

a) at least one core layer is formed, which contains PET-fabrics bound to a matrix of thermosetting plastic and longitudinal carbon fibers so that the area that contains carbon fibers extends in the transversal direction of the band towards the central line at most as far as to the area to be perforated,

b) holes are perforated to the area to be perforated, the diameter of which is bigger than that of the holes in the final band,

c) the core layer is surrounded by a layer of thermoplastic which at the same time fills the holes formed in point b) and

d) the final holes are perforated on the places of the holes formed in point b) to get a perforation that is surrounded by an edge of thermoplastic.

In the first step of the method the core layer of the band is formed with technics that are known in themselves. The core layer contains PET-fabrics bound to a matrix of thermosetting plastic between which there are longitudinal carbon fibers as reinforcements. The areas containing carbon fibers are placed in the edges of the band so that they do not extend as far as to the central region of the band to which the perforation of the band is punctioned.

Then a perforation is punctioned to the central region of the band that, as already was stated, does not contain carbon fibers so that the dimensions of the holes are somewhat bigger than those of the final holes to be made in the band. The perforation is easy-made because there are not any carbon fibers at all in the area to be perforated. After this, the core layer is surrounded by conventional means by a layer of thermoplastic which now surrounds the whole core layer at least as far as to the edge of the band. At the same time the thermoplastic fills the holes perforated in the core layer.

In the last stage the final holes are perforated, the size of which is somewhat smaller than the holes that were perforated earlier and filled with thermoplastic. The perforation through the thermoplastic is easy-made and now there is an edge of thermoplastic in the edges to be formed which edge gives a good abrasion resistance for the perforation.

In the core layer, the carbon fiber reinforcement is preferably placed between the PET-farbics so that the PET-fabrics support the carbon fiber reinforcement during the forming and curing of the matrix of thermosetting plast.

According to an advantageous embodiment of the method of the invention the core layer is divided into two separate layers, and by regulation of the mutual distance of the layers during the forming of the shell of thermoplastic, the rigidity properties of the final product can be variably regulated. If the mutual distance of the core layers is changed in the longitudinal direction of the band, then the rigidity of the band changes at the same time. Naturally, there can be more than two core layers within the scope of the invention and furthermore the composition of the core layers naturally can be the same or different in each layer depending on the wished rigidity and strength properties.

The invention is described in detail in the following with reference to the enclosed figures in which:

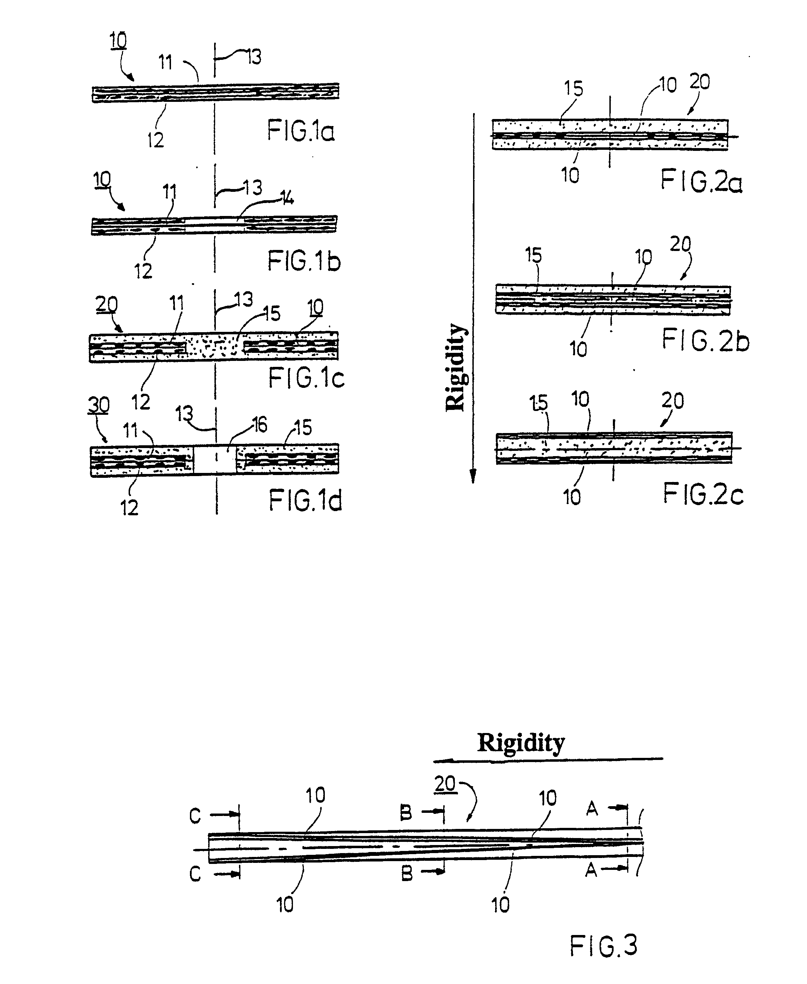

Figs 1a,1b,1c and 1d present compositions and stages of preparation of the different layers of the perforated band of the invention, Figs 2a,2b and 2c present a band containing two core layers as a cross section and Fig. 3 presents the core band of Figs 2a-2c as a longitudinal section.

In Figs 1a-1d there is presented the structure of the perforated band of the invention in different stages of preparation. In Fig. 1a the core 10 of the band comprises PET-fabrics 11 bound by thermosetting resin, which fabrics preferably, but not necessarily, extend all over the length of the band. Longitudinal carbon fibers 12 have been placed between the PET-fabrics 11 to give longitudinal rigidity to the core layer. As is presented in Fig. 1a the carbon fibers 12 do not extend as far as to the central line 13 in the central region.

In Fig. 1b the core 10 of the band has been presented foreseen with holes 14 perforated on the central region. In Fig. 1c the band 20 has been presented with a layer 15 of thermoplastic that covers the core band 10 and the PET-fabrics 11 included in that and the carbon fibers 12 and the holes 14 presented in Fig. 1b. Fig. 1d presents the final band 30 with holes 16, the size of which is somewhat smaller than that of the holes 14 presented in Fig. 1b and an edge of thermoplastic surrounds the holes 16 which edge gives a good abrasion resistance to the perforation.

Figs 2a,2b and 2c and Fig. 3 present the band 20 of the invention, the rigidity of which changes in the longitudinal direction of the band. Thus Fig. 2a presents a cross section of the band 20 along line A in Fig. 3 and two core layers 10 can be seen there, inside the thermoplastic 15, so that the core layers 10 on this place are together or very close to each other. Fig. 2b presents a cross section along line B in Fig. 3 and the core layers 10 can be seen on a longer distance from each other than in Fig. 2a. In Fig. 2c the cross section has been presented along line C of Fig. 3 and in that the core layers 10 can be seen drawn close to the surface layers of the band 20. In Fig. 3 a longitudinal cross section of the band 20 of Figs 2a-2c has been presented and a divergation of two core layer 10 from each other can be seen from line A to line C whereat the rigidity of the band 28 at the same time increases variably on the same distance.

The invention is concerned with a perforated (16) abrasion resistant band (20,30) that contains carbon fibers (12) as reinforcement and a method of preparing an abrasion resistant band. The band comprises at least one core layer that consists of PET-fabrics (11) bound to a matrix of thermosetting plastic and of longitudinal carbon fibers (12) so that the area containing carbon fibers (12) extends in the transversal direction of the band (20) towards the central line at most as far as to the area (14) to be perforated, a shell (15) of thermoplastic, that surrounds said core layer (16) and a perforation (16) made in the central line (13) or central region of the band (30) in which perforation each hole (16) is surrounded with an edge of thermoplastic.

## Claims

1. A perforated (16), abrasion resistant band (20,30) that contains carbon fibers (12) as reinforcement, **characterized** in that it comprises

a) at least one core layer (10) formed of PET-fabrics (11) bound to a matrix of thermosetting plastic and of longitudinal carbon fibers (12) so that the area containing carbon fibers extends in the transversal direction of the band (20) towards the central line (13) at most as far as to the area (14) to be perforated,

b) a shell of thermoplastic that surrounds said core layer (16) and

c) a perforation (16) punctioned in the central line (13) or central region of the band (30), in which perforation each hole (16) is surrounded with an edge of thermoplastic.

2. Band of claim 1, **characterized** in that the carbon fibers (12) in the core layer (10) are placed between the PET-fabrics (11).

3. Band of claim 1 or 2, **characterized** in that the core layer (10) is divided into two different layers.

4. Band of claim 3, **characterized** in that the mutual distance of the core layers (10) changes in the longitudinal direction of the band (20) to change the rigidity profile.

5. Method of preparing a perforated (16), abrasion resistant band (20,30), which band (20,30) contains carbon fibers (12) as reinforcement, **characterized** in that it comprises the following steps:

a) at least one core layer (10) is formed which contains PET-fabrics bound to a matrix of thermosetting plastic and longitudinal carbon fibers (12) so that the area containing carbon fibers extends in the transversal direction of the band (20) towards the central line (13) at most as far as to the area to be perforated,

b) holes (14) are perforated to the zone to be perforated, the diameter of which is bigger than that of the holes (16) in the final band (30),

c) the core layer (10) is surrounded by a layer (15) of thermoplastic which at the same time fills the holes (14) formed in stage (b) and

d) the final holes (16) are perforated on the places of the holes (14) formed in stage (b) to get a perforation (16) that is surrounded by an edge of thermoplastic.

6. Band of claim 1, **characterized** in that the carbon fibers (12) in the core layer (10) are placed between the PET-fabrics (11).

7. Method of claim 5 or 6, **characterized** in that there are two or more core layers (10) and that the mutual distance of the core layers (10) is constant in the longitudinal direction of the band (20).

8. Method of claim 5 or 6, **characterized** in that there are two or more core layers (10) and that the mutual distance of the core layers (10) is constant in the longitudinal direction of the band (20) to change the rigidity profile.

FIG.1a

FIG.1b

FIG.1c

FIG.1d

FIG.2a

FIG.2b

FIG.2c

Rigidity

Rigidity

FIG.3